# EUROPÄISCHE PATENTSCHRIFT

(11) **EP 0 325 177 B1**
(45) Veröffentlichungstag und Bekanntmachung des Hinweises auf die Patenterteilung: **21.09.1994**
(21) Anmeldenummer: 89100581.1
(22) Anmeldetag: 13.01.1989
(51) Int. Cl.: H02G 3/16, H01R 9/22

(54) **Verteilerdose mit mehreren Klemmanschlüssen**
Distribution box comprising a plurality of connection terminals
Boîte de distribution comportant plusieurs bornes de connexion

(30) Priorität: 18.01.1988 DE 8800513 U
(43) Veröffentlichungstag der Anmeldung: 26.07.1989
(73) Patentinhaber: SIEMENS AKTIENGESELLSCHAFT, 80333 München (DE)
(72) Erfinder: Krautwald, Herbert, Dipl.-Ing.(FH), D-8000 München 90 (DE); Foissner, Herbert, Dipl.-Ing.(FH), D-8190 Wolfratshausen (DE); Riedel, Günter, Ing.(grad), D-8037 Olching (DE)

(56) Entgegenhaltungen:
- DE-A- 1 665 201

## Beschreibung

Die Erfindung bezieht sich auf eine Verteilerdose mit mehreren Klemmanschlüssen gemäß dem Oberbegriff des Anspruchs 1.

Zum elektrischen Anschluß von Detektoren der Intrusionsschutztechnik, z.B. Regelkontakte, Magnetschalter oder Glasbruchmelder, werden Verteilerpunkte in Form von Verteilerdosen in Unterputz- oder Aufputzgehäusen benötigt. Bisher wurden als Verteilerpunkte Verteilerdosen mit einer steckbaren Lötanschlußtechnik eingesetzt. Diese Stecker weisen einheitlich jeweils fünf Anschlußpunkte auf. Beim Anlöten der Anschlußleitung wird oft in nachteiliger Weise durch die hohe Löttemperatur das isolierende Thermoplastgehäuse so verformt, daß sich die lose eingelegte Kontaktfeder fest im Kunsttoff verankert. Hierdurch ist die Kontaktsicherheit nicht mehr gewährleistet, weil sich die Kontaktfeder nicht mehr frei dem starr eingebetteten Kontaktstift anpassen kann. Als weiterer Nachteil ergibt sich, daß im Wartungsfall bei einer eventuellen Fehlersuche kein Einzelanschluß sondern nur eine Fünfergruppe gelöst werden muß. Darüber hinaus ist es nachteilig, daß der Anschlußstift oder der Anschlußhohlniet in einer Leiterplatte eingeschwallt ist, was zusätzliche Kontaktstellen in einem Leitungszug zur Folge hat. Jede zusätzliche Kontaktstelle in einem Leitungszug verringert die Störsicherheit und Zuverlässigkeit einer Verteilerdose, insbesondere in einer Gefahrenmeldeanlage.

In der DE-A-1 665 201 ist eine Abzweig- insbesondere Unterputzdose beschrieben, die mehrere Klemmanschlüsse aufweist, in denen jeweils eine mehrpolige Kontaktvorrichtung angeordnet ist. Die bekannte Verteilerdose weist eine Verteilerplatte auf, in der mehrere Kammern für jeweilige Kontaktvorrichtungen vorgesehen sind. Eine Verwendung dieser bekannten Verteilerdose in Gefahrenmeldeanlagen ist nicht vorgesehen und auch nicht möglich, da ein sogenannter Sabotagekontakt nicht vorgesehen ist.

Es ist daher Aufgabe der Erfindung, eine Verteilerdose der eingangs beschriebenen Art derart weiterzubilden, daß mit möglichst wenig Kontaktstellen je Leitungszug auszukommen und für Wartungszwecke eine gezielte Einzeladertrennung möglich ist und daß die weitergebildete Verteilerdose in Gefahrenmeldeanlagen verwendet werden kann.

Diese Aufgabe wird bei einer Verteilerdose der obengenannten Art erfindungsgemäß durch die kennzeichnenden Merkmale des Anspruchs 1 gelöst.

Mit dieser erfindungsgemäßen Ausbildung der Verteilerdose sind weniger Kontaktstellen in einem einzigen Leitungszug vorhanden, so daß die elektrische Funktionssicherheit erhöht ist. Darüber hinaus ist für die Wartung ein Auftrennen einer einzigen Leitung verhältnismäßig einfach möglich, es müssen nicht immer ganze Gruppen von Leitungen in einem einzigen Stecker gezogen werden. Mit der erfindungsgemäßen Kontaktvorrichtung (K-Modul) wird ein neuer raumsparender, kostengünstiger Verteileranschlußpunkt errreicht, bei dem in verhältnismäßig einfacher Weise die einzelnen Adern der Leitungszüge kontaktiert werden können, ohne daß etwa mit Hilfe von Lot ein Kontakt hergestellt werden muß, wobei die relativ große Öffnung, etwa in der Mitte des Verteilers, ein übersichtliches nd einfaches Anschließen an der Frontseite des fest montierten Verteilers ermöglicht. Der Sabotagekontakt, von einem auf der Verteilerplatte angeordneten Reed-Kontakt und einem am Verteilerdeckel entsprechend angebrachten Magneten gebildet, ermöglicht die Verwendung der Verteilerdose in Gefahrenmeldeanlagen, insbesondere in Intrusionsschutzmeldeanlagen.

Weitere Ausgestaltungen und Vorteile der Erfindung ergeben sich aus den Unteransprüchen. Dabei ist zweckmäßigerweise eine Bodenplatte vorgesehen, die mit Rastnasen in der Verteilerplatte verrastbar angeordnet ist, so daß die Kontaktvorrichtungen in den Nestern gehalten und nach unten isolierend abgedeckt sind. Beispielsweise kann die Kontaktvorrichtung von vier Käfigzugfedern gebildet sein, die unter mechanischer Vorspannung selbsthaltend auf dem Kontaktbügel aufgesetzt sind. Zweckmäßigerweise sind die Kontaktfedern parallel zueinander angeordnet.

In vorteilhafter Weise ist die Kontaktvorrichtung mit je zwei Käfigfedern ausgebildet, wobei die beiden Hälften des Kontaktbügels mit einem Brückensteg verbunden sind. Hierdurch ist ein vierpoliger Kontaktmodul gebildet, der in einfacher aber zweckmäßiger Weise zu zwei doppelpoligen Anschlußvorrichtungen umgebildet werden kann indem der Brückensteg, beispielsweise mittels eines Seitenschneiders, von Hand aufgetrennt werden kann. Dies kann ohne weiteres im eingebauten Zustand der Kontaktmodule erfolgen.

In vorteilhafter Weise ist darüber hinaus mindestens eine durchgerissene Sicke an dem Kontaktbügel, vorzugsweise an jeder Hälfte des Kontaktbügels vorgesehen, so daß jedes Kontaktpaar im Nest einen festen Sitz hat.

An zwei Ausführungsbeispielen wird die Erfindung anhand der Zeichnung im folgenden näher erläutert. Dabei zeigen
- Fig.1: eine Verteilerdose in runder und Unterputzausführungsform in Draufsicht,
- Fig.2: eine Teilseitenansicht im Schnitt II-II gemäß der FIG 1,
- Fig.3: die Kontaktvorrichtung (K-Modul),
- Fig.4: eine Teilansicht mit der Kontaktvorrichtung im Schnitt,
- Fig.5: eine Teilansicht im Schnitt V-V gemäß FIG 1,
- Fig.6: ein Werkzeug einzeln und eingesteckt und
- Fig.7: eine Verteilerdose in länglicher Aufputzausführung.

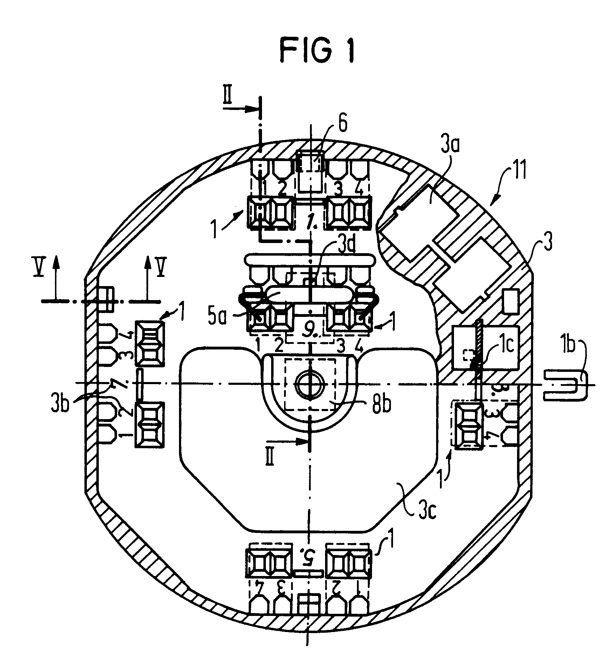

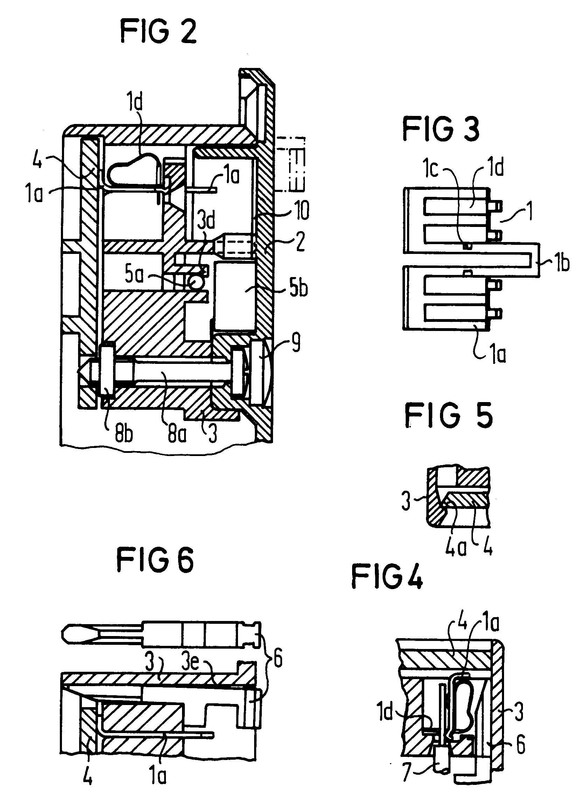

In den Figuren 1 bis 5 ist eine runde Verteilerdose 11 in einer Unterputzausführung dargestellt. Die erfindungsgemäße Verteilerdose 11 paßt in jede handelsübliche Installationsdose. In der Verteilerplatte 3 sind die wesentlichste Elemente der Verteilerdose angebracht. Bei dieser Ausführungsform sind neun Nester 3a mit jeweils einer Kontaktvorrichtung (K-Modul) 1 vorgesehen. Davon sind acht kreisförmig im äußeren Bereich angeordnet und eine zusätzliche neunte Kontaktvorrichtung ist zum Inneren hin parallel zu einer Kontaktvorrichtung angeordnet. In der Mitte ist von der Unterseite her offen eine Ausnehmung für die Mutter 8b einer Schraubverbindung 8. Im mittleren Bereich ist ein Durchbruch 3c angeordnet durch den die Leitungsdrähte zum Verklemmen an den Kontaktvorrichtungen geführt sind. Die Kontaktvorrichtung 1 besteht aus dem Kontaktbügel 1a und den vier aufgesetzten Käfigzugfedern 1d. Dies ist in FIG 3 dargestellt. Dort ist auch der symmetrische Aufbau gut zu erkennen und die Verbindung der beiden Kontaktbügelhälften 1a mit dem Brückensteg 1b, der auftrennbar ist.

Damit die Kontaktvorrichtung 1 einen guten Sitz im Nest 3a hat, weist jede Hälfte der Kontaktvorrichtung 1 eine angerissene Sicke 1c auf, wie dies in der FIG 1 ersichtlich ist. In FIG 4 ist im Detail gezeigt, wie der Leitungsdraht 7 in die Käfigzugfeder 1d eingeführt ist. Dazu wird mit dem Werkzeug 6, welches detailiert noch in FIG 6 dargestellt ist, die Käfigzugfeder 1d in die entsprechende Position gebracht. Nach dem Herausziehen des Werkzeugs 6, es kann dazu auch ein regulärer Schraubendreher verwendet werden, drückt die Käfigzugfeder 1d den Leitungsdraht 7 gegen den hier besonders ausgebildeten Kontaktbügel 1a, so daß eine zuverlässige Kontaktgabe gewährleistet ist. Das mitgelieferte Werkzeug 6 kann zur Aufbewahrung in einer Ausnehmung 3e der Verteilerplatte 3 bei Nichtgebrauch eingesteckt werden, wie dies in Fig. 6 und Fig.1 ersichtlich ist. Die Bodenplatte 4, aus Kunststoff gefertigt, verriegelt sich selbst über Rastnasen 4a in der Verteilerplatte 3 und fesselt somit die Kontaktvorrichtungen 1 und deckt diese auch isolierend ab. Dies ist in Fig. 2 und im Detail in Fig.5 gezeigt.

Zur Sicherung gegen Sabotage ist die Verteilerdose mit einem Reedkontakt 5a und einem entsprechend zugeordneten Magenet 5b versehen. Der Reed-Kontakt 5a wird in der Kontaktvorrichtung 1, hier mit Nummer 9 als Beschriftung 3b bezeichnet, kontaktiert und geklemmt. Dabei ist der Brückensteg 1b aufgetrennt. Mit der Rastnase 3d (Fig.1 und 2) ist der Sabotage-Reed-Kontakt 5a gehalten. Der zugeordnete Magnet 5b ist auf der Innenseite des Verteilerdeckels 2 angebracht.

Zusätzlich gegen Sabotage weist auf der Innenseite der Verteilerdeckel 2 eine Armierung, beispielsweise eine Metallplatte 10 auf. Diese ist zumindest im Bereich der Kontaktvorrichtungen angeordnet. Der Verteilerdeckel 2 ist mittels einer Schraubverbindung 8 auf der Verteilerplatte 3 festgehalten. Dabei ist die Schraube 8a, die in der Mutter 8b eingedreht ist, versenkt angeordnet, so daß mit einer Plombe 9 die Schraubverbindung blombiert werden kann (Fig.2).

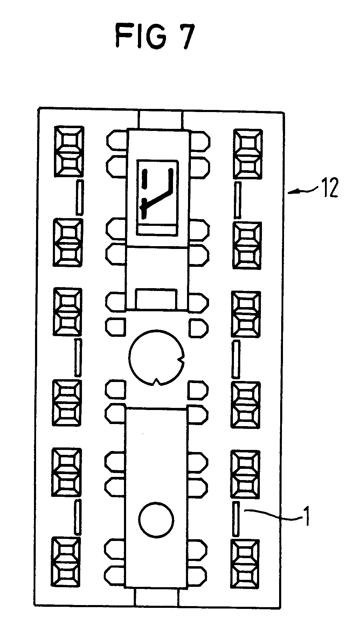

In Fig.7 ist ein Ausführungsbeispiel für einen Aufputzverteiler 12 dargestellt, bei dem die sechs einzelnen Kontaktvorrichtungen 1 in zwei zueinander parallelen Reihen angeordnet sind. Diese können blockweise, z.B. auf eine Tragschiene, aufgereiht werden. Die Ausgestaltung der Kontaktvorrichtung und das Einbringen in den Nestern der Verteilerplatte entspricht dem Ausführungsbeispiel der runden Unterputzverteilerdose.

## Patentansprüche

1. Verteilerdose mit mehreren Klemmanschlüssen, welche von jeweiligen mehrpoligen Kontaktvorrichtungen (1) gebildet sind und mit einer Verteilerplatte (3), in der mehrere Nester (3a) angeordnet sind, in die jeweils eine Kontaktvorrichtung (1) eingebracht ist, wobei die Verteilerplatte (3) einen relativ großen Durchbruch (3c) etwa in der Mitte der Verteilerdose aufweist,
**gekennzeichnet** durch folgende Merkmale:
a) die Kontaktvorrichtung (1) weist einen Kontaktbügel (la) und mehrere Käfigzugfedern (1d) auf,
b) die Verteilerdose weist einen Sabotagekontakt (5) auf, der von einem auf der Verteilerplatte (3) angeordneten Reed-Kontakt (5a) und einem am Verteilerdeckel (2) entsprechend angebrachten Magnet (5b) gebildet ist.

2. Verteilerdose nach Anspruch 1,
**dadurch gekennzeichnet,**
daß eine Bodenplatte (4) vorgesehen ist, die mit Rastnasen (4a) in der Verteilerplatte (3) verrastbar angeordnet ist.

3. Verteilerdose nach Anspruch 1 oder 2,
**dadurch gekennzeichnet**,
daß die Kontaktvorrichtung (1) vier Käfigzugfedern (1d) aufweist, die unter mechanischer Vorspannung selbsthaltend auf dem Kontaktbügel (1a) aufgesetzt sind.

4. Verteilerdose nach einem der vorhergehenden Ansprüche,
**dadurch gekennzeichnet,**
daß die Käfigzugfedern (1d) parallel zueinander angeordnet sind.

5. Verteilerdose nach einem der vorhergehenden Ansprüche,
**dadurch gekennzeichnet,**
daß die Kontaktvorrichtung (1) symmetrisch mit je zwei Käfigzugfedern (1d) ausgebildet ist, wobei die beiden Hälften des Kontaktbügels (1a) mit einem auftrennbaren Brückensteg (1b) verbunden sind.

6. Verteilerdose nach einem der vorhergehenden Ansprüche,
**dadurch gekennzeichnet,** daß der Kontaktbügel (1a) zumindest eine Sicke (1c) an jeder Hälfte aufweist.

7. Verteilerdose nach einem der vorhergehenden Ansprüche,
**dadurch gekennzeichnet,**
daß der Verteilerdeckel (2) mit einem Schraubverschluß (8) auf der Verteilerplatte (3) befestigt ist, wobei die Schraube (8a) mit einer im Deckel (2) eingepreßten Plombe (9) verplombt ist.

8. Verteilerdose nach einem der vorhergehenden Ansprüche,
**dadurch gekennzeichnet,**
daß in der Verteilerplatte (3) eine Ausnehmung (3e) für die Aufnahme eines Werkzeugs (6) vorgesehen ist.

9. Verteilerdose nach einem der vorhergehenden Ansprüche,
**dadurch gekennzeichnet,**
daß der Verteilerdeckel (2) auf der Innenseite zumindest im Bereich der Kontaktvorrichtung (1) eine Armierung (10) aufweist.

10. Verteilerdose nach einem der vorhergehenden Ansprüche,
**dadurch gekennzeichnet,** daß sie als runder Unterputzverteiler (11) mit etwa kreisförmig angeordneten Kontaktvorrichtungen (1) oder als rechteckförmiger Aufputzvertieler mit in zwei Reihen parallel angeordneten Kontaktvorrichtungen (1) ausgebildet ist, wobei die Kontaktvorrichtungen (1) blockweise, beispielsweise auf einer Tragschiene, aufgereiht sein können.

## Claims

1. Distribution box having a plurality of terminal connections which are formed by respective multipole contact devices (1) and having a distribution panel (3) in which a plurality of nests (3a) are arranged in which in each case one contact device (1) is incorporated, the distribution panel (3) having a relatively large orifice (3c) approximately in the centre of the distribution box,
characterized by the following features:
a) the contact device (1) has a contact clip (1a) and a plurality of cage-type tension springs (1d),
b) the distribution box has a sabotage contact (5) which is formed by a reed contact (5a) which is arranged on the distribution panel (3), and by a magnet (5b) which is fitted in a suitable manner on the distributor cover (2).

2. Distribution box according to Claim 1, characterized in that a base panel (4) is provided which is arranged such that it can latch in the distribution panel (3) by means of latching tabs (4a).

3. Distribution box according to Claim 1 or 2, characterized in that the contact device (1) has four cage-type tension springs (1d) which are placed in a self-latching manner on the contact clip (1a), subject to mechanical prestressing.

4. Distribution box according to one of the preceding claims, characterized in that the cage-type tension springs (1d) are arranged parallel to one another.

5. Distribution box according to one of the preceding claims, characterized in that the contact device (1) is constructed symmetrically with in each case two cage-type tension springs (1d), the two halves of the contact clip (1a) being connected to a bridge web (1b) which can be cut.

6. Distribution box according to one of the preceding claims, characterized in that the contact clip (1a) has at least one bead (1c) on each half.

7. Distribution box according to one of the preceding claims, characterized in that the distributor cover (2) is mounted on the distribution panel (3) by means of a screw fastener (8), the screw (8a) being security sealed by means of a security seal (9) which is pressed in the cover (2).

8. Distribution box according to one of the preceding claims, characterized in that a recess (3e) for accommodating a tool (6) is provided in the distribution panel (3).

9. Distribution box according to one of the preceding claims, characterized in that the distributor cover (2) has reinforcement (10) on the inside, at least in the region of the contact device (1).

10. Distribution box according to one of the preceding claims, characterized in that it is constructed as a round flush-mounted distributor (11) having contact devices (1) arranged approximately in the form of a circle, or as a rectangular surface-mounted distributor having contact devices (1) arranged parallel in two rows, it being possible to arrange the contact devices (1) in rows block by block, for example on a mounting rail.

## Revendications

1. Boîte de distribution comportant plusieurs bornes qui sont constituées par des dispositifs de contact multipolaires respectifs (1), et une plaque de distribution (3), dans laquelle sont ménagées plusieurs cavités (3a), dans lesquelles sont logés des dispositifs respectifs de contact (1), la plaque de distribution (3) possédant un passage relativement large (3c), approximativement au centre de la boîte de distribution,
caractérisée par les particularités suivantes :
a) le dispositif de contact (1) possède un étrier de contact (1a) et plusieurs ressorts de traction en forme de cage (1d),
b) la boîte de distribution possède un contact de sabotage (5), qui est formé par un contact à lames sous vide (5a), disposé sur la plaque de distribution (3), et par un aimant (5b) disposé de façon correspondante sur le couvercle de distribution (2).

2. Boîte de distribution suivant la revendication 1, caractérisée par le fait qu'il est prévu une plaque de fond (4), qui est disposée de manière à pouvoir s'encliqueter au moyen de becs d'encliquetage (4a) dans la plaque de distribution (3).

3. Boîte de distribution suivant la revendication 1 ou 2, caractérisée par le fait que le dispositif de contact (1) possède quatre ressorts de traction en forme de cage (1d), qui sont montés avec maintien automatique sur l'étrier automatique (1a), sous précontrainte mécanique.

4. Boîte de distribution suivant l'une des revendications précédentes, caractérisée par le fait que les ressorts de traction en forme de cage (1d) sont disposés parallèlement entre eux.

5. Boîte de distribution suivant l'une des revendications précédentes, caractérisée par le fait que le dispositif de contact (1) est réalisé symétriquement avec respectivement deux ressorts de traction en forme de cage (1d), les deux moitiés de l'étrier de contact (1a) étant reliées à une barrette formant étrier (1b) pouvant être rompue.

6. Boîte de distribution suivant l'une des revendications précédentes, caractérisée par le fait que l'étrier de contact (1a) possède, dans chaque moitié, au moins une moulure (1c).

7. Boîte de distribution suivant l'une des revendications précédentes, caractérisée par le fait que le couvercle de distribution (2) est fixé à un dispositif de fermeture fileté (8) sur la plaque de distribution (3), la vis (8a) étant plombée au moyen d'un plomb à sceller (9) enfoncé dans le couvercle (2).

8. Boîte de distribution suivant l'une des revendications précédentes, caractérisée par le fait qu'un logement (3e) servant à loger un outil (6) est ménagé dans la plaque de distribution (3).

9. Boîte de distribution suivant l'une des revendications précédentes, caractérisée par le fait que le couvercle de distribution (2) possède, sur sa face intérieure, une armature (10) au moins au voisinage du dispositif de contact (1).

10. Boîte de distribution suivant l'une des revendications précédentes, caractérisée par le fait qu'elle est réalisée sous la forme d'une boîte de distribution cylindrique encastrée (11) comportant des dispositifs de contact (1) répartis selon une disposition approximativement circulaire, ou bien sous la forme d'une boîte de distribution rectangulaire montée en saillie et comportant des dispositifs de contact (1) répartis suivant deux rangées parallèles, les dispositifs de contact (1) pouvant être disposés en série par blocs, par exemple sur un rail de support.
